# EUROPÄISCHE PATENTSCHRIFT

(11) **EP 1 249 743 B1**
(45) Veröffentlichungstag und Bekanntmachung des Hinweises auf die Patenterteilung: **02.11.2006**
(21) Anmeldenummer: 01109015.6
(22) Anmeldetag: 11.04.2001
(51) Int. Cl.: G05B 17/02

(54) **Verfahren und Computerprogramm zur statischen Simulation nichtlinearer Zusammenhänge in thermodynamischen Netzwerken**
Method and computer program for the statical simulation of non-linear relations in thermodynamical networks
Procédé et programme d'ordinateur pour la simulation statique des rapports non-linéaires dans des réseaux thermodynamiques

(43) Veröffentlichungstag der Anmeldung: 16.10.2002
(73) Patentinhaber: Alstom Technology Ltd, 5400 Baden (CH)
(72) Erfinder: Hiegemann, Michael, Dr., 5235 Rüfenach (CH); Lübben, Katrin, 5400 Baden (CH); Nowi, Andreas, 5406 Baden-Rütihof (CH); Rüth, Ulrich, 5430 Wettingen (CH); Simmen, Roland Charles, 5430 Wettingen (CH)

(56) Entgegenhaltungen:
- EP-A- 0 770 945
- EP-A- 0 803 808
- WO-A1-01/06357
- US-A- 5 619 433
- US-A- 6 041 263
- R.CUBERT ET AL: "SOFTWARE ARCHITECTURE FOR DISTRIBUTED SIMULATION MODELS" PROCEEDINGS OF SPIE-CONFERENCE ON ENABLING TECHNOLGY FOR SIMULATION SCIENCE, Bd. 3369, 1998, Seiten 154-163, XP001023531 USA
- HALUNG W.A.: 'Sprachelemente zur Formulierung von Ablaufsteuerungen' INFORMATIK FORSCH. ENTW. Bd. 10, 1995, Seiten 139 - 146
- REIFFER A.; JAKOB W.; PETERS D.; SCHNEIDER A.: 'Verteilte Simulation und Optimierung von Mikrosystemen' 8. GMM-WORKSHOP "METHODEN UND WERKZEUGE ZUM ENTWURF VON MIKROSYSTEMEN" 03 Dezember 1999, BERLIN, Seiten 255 - 263
- SCHNEIDER P.; PARODAT S.; SCHNEIDER A., SCHWARZ P.: 'A modular approach for simulation-based optimization of MEMS' DESIGN, MODELING, AND SIMULATION IN MICROELECTRONICS 30 November 2000, SINGAPORE, Seiten 71 - 82

## Beschreibung

### Technisches Gebiet

Die Erfindung betrifft ein Verfahren zur statischen Simulation nichtlinearer Zusammenhänge in thermodynamischen Netzwerken mittels wenigstens eines Computers.
Derartige thermodynamische Netzwerke ergeben sich bei der Bilanzierung von thermischen Anlagen zur Stromerzeugung, bei Fernwärme- oder Prozessdampfversorgungsanlagen, oder bei mechanischen oder thermischen Trennanlagen, wobei diese Aufzählung keinesfalls abschliessend zu verstehen ist, sondern nur einige Beispiele geben soll.
Die Erfindung betrifft weiterhin ein Computerprogramm, mit welchem ein Computer zur Durchführung des erfindungsgemässen Verfahrens veranlasst wird, sowie ein Computerprogrammprodukt, wie insbesondere ein Speichermedium, auf welchem Programmsequenzen zur Durchführung des erfindungsgemässen Verfahrens gespeichert sind.

### Stand der Technik

Technische Systeme wie Wärmekraftanlagen oder jede Art verfahrenstechnischer Anlagen erfordern bei ihrer Auslegung eine möglichst genaue Berechnung der Stoff- und Energieströme. Dies erfordert insbesondere die Berechnung der thermodynamischen Zustandgrössen der strömenden Medien innerhalb eines solchen Systems. Innerhalb einer Kraftwerksanlage sind die Stoff-, Impuls- und Energieströme komplex vernetzt, so dass zu deren Berechnung und Bilanzierung bevorzugt Computer oder Computersysteme einzusetzen sind. Bei Verfahren zur Berechnung und Bilanzierung thermodynamischer Netzwerke in Form einer statischen Simulation der gegebenen nichtlinearen Zusammenhänge auf Computern oder Computersystemen sind grundsätzlich drei Schritte notwendig durchzuführen. In einem ersten Schritt wird das thermodynamische Netzwerk konfiguriert. In einem zweiten Schritt erfolgt eine Lösung der Massen-, Energie- und Impulsbilanzen in dem im ersten Schritt definierten Netzwerk. In einem dritten Schritt müssen die Ergebnisdaten der Berechnung in einer für den Anwender zugänglichen Form, vorzugsweise grafisch, dargestellt werden. Entsprechend sind Programme für die Durchführung solcher Verfahren häufig in unterschiedliche Module unterteilt, beispielsweise in ein Konfigurationsmodul, ein Lösermodul ("Solver"), und ein Ausgabemodul.

Computerprogramme zum Einsatz in eher traditionellen Bereichen der Technik, wie eben der thermodynamischen und fluidmechanischen Bilanzierung technischer Systeme, wurden natürlich schon in frühen Stadien der Computeranwendungen entwickelt und bis heute fortgeschrieben. Damit tragen derartige Programme aber auch Ballast in Form nur mehr wenig zeitgemässer informationstechnischer Konzepte mit sich herum. Einerseits erfolgt der Datenaustausch zwischen den Modulen mittels spezifisch formatierter Dateien. Hieran scheitert einerseits die uneingeschränkte Möglichkeit zur generischen Einbindung derartiger Berechnungsprogramme in Prozessketten. Andererseits behindert dies auch die Verbindung der Berechnungsprogramme mit zeitgemäss anwenderfreundlichen, objektorientierten und kontextsensitiven Benutzerschnittstellen bei der Konfiguration der Schaltungen wie auch bei der Darstellung der Ergebnisdaten.

Ein Verfahren zur graphischen Erstellung verfahrenstechnischer Schemata ist im Übrigen aus der EP 0 770 945 bekannt.

Zusammenfassend sind Bilanzierungsprogramme und statische Simulationsprogramme für Wärmekraftanlagen und verfahrenstechnische Anlagen jeder Art nach dem Stand der Technik eher statische, unflexible Gebilde, die sich nur mit Einschränkungen in weitergehende Programme einbinden lassen, und die daher die Möglichkeiten moderner offener Rechnerarchitekturen nur sehr unvollständig zu nutzen vermögen. Zudem werden nach dem Stand der Technik auch die Möglichkeiten, welche grafische Benutzeroberflächen bieten, nur unvollständig genutzt.

### Darstellung der Erfindung

Hier will die Erfindung Abhilfe schaffen. Der Erfindung, wie sie in den Ansprüchen gekennzeichnet ist, liegt die Aufgabe zugrunde, ein Verfahren zur statischen Simulation nichtlinearer Zusammenhänge in thermodynamischen Netzwerken anzugeben, welches die Nachteile des Standes der Technik vermeidet.

Diese Aufgabe wird durch die Gesamtheit der Merkmale des Anspruchs 1 gelöst, wobei vorteilhafte Weiterbildungen des Anspruchs 1 in den abhängigen Ansprüchen angegeben sind.

Kern der Erfindung ist also, bei einem Verfahren zur statischen Simulation nichtlinearer Zusammenhänge in thermodynamischen Netzwerken, bei welchem Verfahren Eingabedaten an ein Berechnungsprogramm oder ein Berechnungsmodul übergeben werden, die Eingabedaten in generischen, formatfreien Datenblöcken in einer Metasprache zu übergeben. Der Terminus "Metasprache" ist in diesem Zusammenhang in dem Sinne zu verstehen, dass die Datenblöcke derart strukturiert sind, dass sie in einer Metasprache notierbar sind. Diese Datenblöcke können dann auf eine einfache und an sich bekannte Weise von einem Parser ausgelesen und interpretiert werden. Die Notation der Datenblöcke erfolgt beispielsweise in einer dem Fachmann auf dem Gebiet der Informationstechnologie wohlbekannten Metasprache insbesondere in Markup Language, oder in Backus-Naur-Notation.

Die Daten werden ganz besonders vorteilhaft im ASCII-Standard übergeben, was weiterhin den Vorteil hat, dass die Konfiguration des thermodynamischen Netzwerkes durch einen entsprechend erfahrenen Anwender einfach angepasst und verändert werden kann.

In Verbindung mit weiteren unten erläuterten Ausgestaltungen des Verfahrens ist es höchst vorteilhaft, die Eingabedaten in einer rekursiven Notation aufzubauen, dergestalt, dass Datenblöcke ineinander schachtelbar sind. Dies ist insbesondere vorteilhaft, um beim Vorliegen von Rekursionen geeignete Software-Werkzeuge zur Interpretation der Eingabedaten einsetzen zu können.

Naturgemäss werden solche Datenblöcke in ASCII-Notation sehr gross. Es kann daher gerade dann, wenn die Eingabedaten über Netzwerke übertragen werden, gegebenenfalls sinnvoll sein, eine Datenkomprimierung auf der Seite des Eingabedatengenerators vorzusehen, und eine Datendekomprimierung auf der Seite des Berechnungsmoduls. Es wäre dann dem Parser, der die Eingabedaten interpretiert, ein Dekomprimierer vorzuschalten.

Eine solche formatfreie Notation der Daten ermöglicht weiterhin, das erfindungsgemässe Verfahren ohne Probleme in offenen heterogenen Systemen einzusetzen, da die Notation der Eingabedaten für das Berechnungsprogramm oder das Berechnungsmodul sowohl von der Hardware-Plattform als auch von der Betriebssystem-Plattform unabhängig ist.

Hingegen ist es häufig von Vorteil, Ergebnisdaten des Berechnungsprogramms in binärer Notation abzulegen, um nachträgliche Manipulationen der Ergebnisdaten zumindest zu erschweren, und auch, um möglichst kompakte Ergebnisdateien zu erzeugen. Ferner kann in binärer Form der Verlust an numerischer Information vermieden werden. Wenn diese Aspekte jedoch von untergeordneter Natur sind gegenüber der Forderung, beispielsweise generische Schnittstellen zwischen den Modulen eines Berechnungssystems verwenden zu können, können auch die Ergebnisdaten ohne weiteres in einer Metasprache und in ASCII-Notation abgelegt werden.

Die Eingabedaten werden erfindungsgemäß durch ein Konfigurationsprogramm oder ein Konfigurationsmodul eines Programmsystems erzeugt. Aufgrund der oben erwähnten vorteilhaften Einsetzbarkeit des erfindungsgemässen Verfahrens in heterogenen verteilten Rechnersystemen kann dabei das Konfigurationsprogramm oder das Konfigurationsmodul auf einem anderen Computer als das Berechnungsprogramm oder das Berechnungsmodul ablaufen. Die erzeugten Konfigurationsdaten, welche ja die Eingabedaten für die Berechnung sind, können aufgrund der erfindungsgemäss gegebenen Vorteile und Flexibilität vollkommen unproblematisch über Datenfernübertragungsleitungen, Netzwerkverbindungen, austauschbare Datenträger, und weitere dem Fachmann geläufige Möglichkeiten des Datenaustauschs ohne erfindungsimmanente Berücksichtigung der verwendeten Rechner- und Betriebssystemtypen ausgetauscht werden. An dieser Seite sei anzumerken, dass der Terminus "Datenfernübertragungsleitungen" im Rahmen der vorliegenden Erfindungsoffenbarung im weitesten Sinne gebraucht wird, so, dass beispielsweise das Internet oder eine Satellitenverbindungen ebenso darunterfallen, wie eine einfache Kopplung zweier Computer über eine serielle oder parallele Schnittstelle. Im Interesse einer möglichst grossen Benutzerfreundlichkeit, und um Fehlbedienungen möglichst auszuschliessen, ist das Konfigurationsprogramm oder Konfigurationsmodul mit einer intuitiv zu bedienenden grafischen Benutzeroberfläche versehen. Diese grafische Benutzeroberfläche ähnelt der Oberfläche eines CAD-Programmes: Bestimmte Funktionselemente thermodynamischer Schaltungen werden durch grafische Symbole gekennzeichnet. Diese grafischen Symbole verfügen über dargestellte Ein- und Ausgänge für thermodynamische Grössen. In Abhängigkeit von der funktionellen Wirkung des Funktionselementes sind physikalische Grössen an den Ein- und Ausgängen über Rechenvorschriften miteinander verknüpft, die sozusagen das Übertragungsverhalten eines Funktionselementes darstellen. Für ein Element kann eine solche Rechenvorschrift in der Regel als mehrdimensionale Abbildungsvorschrift für die Verknüpfung einer Anzahl in der Regel nicht voneinander unabhängiger thermodynamischer Grössen an einer Anzahl von Eingängen mit diesen Grössen an einer anderen Anzahl von Ausgängen angesehen werden. Die Funktionselemente werden vorteilhaft durch allgemein bekannte und in der Verfahrens-, Energie-, oder Wärmetechnik verwendete aussagekräftige Symbole dargestellt. Der Anwender kann beispielsweise auf der grafischen Oberfläche Ausgänge eines Funktionselementes mit Eingängen anderer Funktionselemente verbinden. Dies erfolgt besonders vorteilhaft, indem mittels eines Zeigeinstrumentes auf der grafischen Benutzeroberfläche, die dem Fachmann auf dem entsprechenden Gebiet auch als GUI geläufig ist, Verbindungslinien zwischen Ein- und Ausgängen gezogen werden. Weiterhin können auch Systemein- und -ausgänge definiert werden. Auf diese Weise kann ein Anwender auf eine einfache Weise ein thermodynamisches Netzwerk konfigurieren, und dabei auf eine Darstellung zurückgreifen, die diesem Anwender, beispielsweise einem Fachmann auf dem Gebiet des thermischen Anlagenbaus, vertraut ist. Die Gefahr unabsichtlicher Fehlbedienungen bei der Konfiguration wird so auf ein Minimum reduziert.

Aus verschiedenen Gründen ist es von Vorteil, wenn das Konfigurationsmodul für den Programmablauf und/oder Status kennzeichnende Daten in einer Meta-Sprache auf einem nichtflüchtigen Speichermedium ablegt und auch wieder lesen kann.

Derartige Methoden zur grafischen Konfiguration sind an sich aus CAD-Programmen bekannt. Im Zusammenhang mit Bilanzierungsprogrammen für thermodynamische Netzwerke sind Verfahren, bei welchen Modulbibliotheken oder die unten erläuterten Subschaltungskonzepte eingesetzt werden, nach dem Stand der Technik nicht oder nur in Fragmenten bekannt. Insbesondere werden in der oben beschriebenen Ausführungsform der Erfindung durch grafische Methoden funktionelle Verbindungen zwischen grafischen Elementen hergestellt, welche in einer ein-eindeutigen Beziehung mit Rechenregeln stehen. Auf diese Weise wird auch eine Verknüpfung der Rechenregeln hergestellt. Gerade dieses Merkmal ist speziell im Zusammenhang mit Programmen zur Bilanzierung thermodynamischer Netzwerke nicht aus dem Stand der Technik bekannt.

Es ist in diesem Zusammenhang weiterhin vorteilhaft, wenn das Konfigurationsmodul eine Anzahl generischer Funktionselemente mit einer bestimmten, für diese Funktionselement typischen generischen Übertragungscharakteristik für die thermodynamischen Grössen enthält. Durch eine Parametrierung der Übertragungscharakteristik kann eine spezifische Rechenvorschrift und damit ein spezifisches Funktionselement oder Bauelement definiert werden. Diese Definition kann so erfolgen, dass das Bauelement durch den Benutzer definierbar ist, oder aber mit einer festen vordefinierten Parametrierung, die durch den Benutzer nicht mehr editierbar ist. Ein solches Bauelement kann in einer Bauelementebibliothek abgelegt und bei der Konfigurierung eines thermodynamischen Netzwerkes referiert werden. Eine weitere, höchst vorteilhafte Funktionalität des Konfigurationsprogrammes oder Konfigurationsmodules - wobei diese Begriffe, soweit der Erfindungsgedanke betroffen ist, vollkommen äquivalent sind und daher redundant verwendet werden können - ergibt sich, wenn aus einzelnen Funktions- oder Bauelementen benutzerdefinierte Subschaltungen erstellt werden können. Den benutzerdefinierten Subschaltungen wird ein eigenes benutzerdefiniertes, wenn möglich mit Vorteil normgerechtes, Grafiksymbol zugeordnet. Dabei kann auch das Übertragungsverhalten der Subschaltung als Ganzes berechnet werden. Bei einer vordefinierten Subschaltung sind nur noch die Ein- und Ausgänge der Subschaltung selbst zugänglich, während die innere Funktion eigentlich eine _{"}Black Box" darstellt. Die Subschaltung stellt eine funktionelle Einheit dar. Eine Subschaltung kann als solche funktionelle Einheit oder Baugruppe in einer Bauelementebibliothek abgelegt und später als solche wieder referiert werden. Daher sind bei dieser vorteilhaften Ausgestaltung des erfindungsgemässen Verfahrens benutzerdefinierte Subschaltungen schachtelbar, das heisst, eine einmal als funktionelle Einheit abgelegte Subschaltung kann wiederum im Zusammenwirken mit anderen Subschaltungen und Funktionselementen referiert und das Zusammenwirken zu einer neuen Subschaltung definiert werden.

Die Definition schachtelbarer Subschaltungen erzwingt die oben erwähnte rekursive Struktur der Eingabedaten, respektive, durch die Möglichkeit rekursive Datenstrukturen zu definieren wird die Definition schachtelbarer Subschaltungen überhaupt erst realisierbar.

Vorteilhaft wird den Subschaltungen ein eigenes Grafiksymbol zugeordnet. Insbesondere sind dabei normgerechte Grafiksymbole zu verwenden, da dieses Vorgehen die Erstellung möglichst normgerechter und damit dem Fachmann verständlicher Dokumentationen ermöglicht. In diesem Zusammenhang wird bei der Realisierung des Verfahrens in einem Computerprogramm oder einem Computerprogrammsystem mit Vorteil ein Symboleditor vorgesehen, welcher es einem Benutzer ermöglicht, Grafiksymbole für Subschaltungen zu generieren.

Prinzipiell können derartige Subschaltungen generisch oder als spezifische Bauelemente definiert werden. Unter einer generischen Definition ist dabei zu verstehen, dass die funktionalen Zusammenhänge zwischen Ein- und Ausgangsgrössen zwar generell bekannt sind, aber die Koeffizienten der entsprechenden Übertragungsfunktionen nicht parametriert sind. Bei einer spezifischen Definition ist tatsächlich eine Baugruppe detailliert parametriert. Anders ausgedrückt, gibt eine generisch definierte Turbine zwar das Übertragungsverhalten einer Turbine wieder, es sind aber beispielsweise keine Aussagen hinsichtlich der Baugrösse gemacht. Die generisch definierte Turbine kann also prinzipiell jede Leistungsgrösse von beispielsweise 20 Watt bis 2 GW, aber auch darunter und darüber, annehmen; dies obliegt der Parametrierung durch einen Anwender.

In erster Linie wird die Parametrierung durch die Eingabe von Zahlenwerten vorgenommen. Es ist im Zusammenhang mit der vorliegenden Erfindung aber auch möglich, die unterschiedlichen Parametrierungen der Randbedingungen und der Funktionselementparameter als mathematischen Ausdruck, das heisst in Abhängigkeit von anderen Schaltungsgrössen, einzugeben. Unter einem Ausdruck ist eine Verknüpfung von Grössen des Systems mit dem Zweck des Aufbaus des vom Lösermoduls zu lösenden Gleichungssystems zu verstehen. Damit sind insbesondere auch dynamische Verknüpfungen von Eingabe und/oder Ergebnisgrössen auf Schnittstellen des Netzwerks möglich.

Ein spezifisch definiertes Bauelement ist hingegen im Detail parametriert; dies könnte im eigentlichen Sinne eine real existierende und auf Lager liegende Baugruppe sein.

In einer weiteren vorteilhaften Ausführungsform des erfindungsgemässen Verfahrens sind Funktionselemente und Subschaltungen mit einer Standardparametrierung versehen, und bilden somit eine Standard-Bauelementedatenbank. Dabei ist es möglich, Kopien von Standardbauelementen zu erstellen, und die Parametrierung für einen speziellen Einsatzzweck abzuändern.

Es ist in diesem Zusammenhang auch darauf hinzuweisen, dass das Konzept der Erstellung von Subschaltungen mit einem eigenen zugeordneten Grafiksymbol deutlich von der einfachen Gruppierung und Zusammenfassung grafischer Elemente, dem sogenannten und wohlbekannten "Clustering", verschieden ist: Bei der oben beschriebenen Methode werden einzelne Funktionselemente nicht nur einfach auf einer obersten Ebene des Konfigurationsmoduls zu einer Gruppe zusammengefasst, sondern sie werden zu einer grafischen wie auch thermodynamisch und informationstechnisch funktionellen Einheit zusammengefasst.

Innerhalb des erfindungsgemässen Verfahrens lassen sich sogenannte und für sich genommen ebenfalls bekannte Layering-Techniken mit Vorteil einsetzen. Dabei werden grafische Elemente und numerische Informationen auf unterschiedlichen Zeichnungsschichten angeordnet, welche selektiv oder in Gruppen ein- und ausblendbar sind. Die Gruppierung von Zeichnungsebenen, welche gemeinsam ein- und ausblendbar sind, ermöglicht die gezielte Darstellung spezifischer Informationen und Erstellung von übersichtlichen Dokumentationen, bei denen die gewünschte Information eingeblendet, und alle nicht notwendige Information ausgeblendet ist. Mit anderen Worten ermöglicht der Einsatz von Layering-Techniken die Darstellung von Untermengen der Schaltungskonfiguration und der Ergebnisdarstellung, und damit unterschiedliche grafische Darstellungen zur Erzeugung beispielsweise eines Wärmeschaltbildes und einer Wärmebilanz oder eines Leckageschaltbildes und einer Leckagebilanz. Insbesondere können auch die Grafiksymbole der Subschaltungen vordefinierte Zeichnungsschichten zugeordnet werden.

Insbesondere können mit Vorteil Gruppen und Funktionselemente in Ihrer grafischen Darstellung und Ergebnisdarstellung in unterschiedlichen Zeichnungsschichten vordefiniert werden, beispielsweise dergestalt, dass bei einer Turbine als Schaltungsgruppe Frischdampf- und Abdampfleitungen samt den zugehörigen Massenströmen und thermodynamischen Zuständen in anderen Zeichnungsschichten oder Gruppen von Zeichnungsschichten abgelegt werden als Leckageleitungen und Leckageströme.

In einer vorteilhaften Ausführungsform des erfindungsgemässen Verfahrens können Funktionselemente, Funktionsgruppen und/oder Subschaltungen für die Bilanzierung des Netzwerkes selektiv inaktiviert und wieder aktiviert werden. Dies ermöglicht Studien von Schaltungsvarianten ohne aufwändige Änderungen der Konfiguration vornehmen zu müssen.

Das Verfahren wird besonders vorteilhaft mit Hilfe eines Computerprogramms gemäss dem Anspruch 19 ausgeführt, wobei die hiervon abhängigen Ansprüche vorteilhafte Ausgestaltungen des Computerprogramms angeben.

Wie eingangs erwähnt, eignet sich das erfindungsgemässe Verfahren insbesondere zum Einsatz in heterogenen offenen Computersystemen. Dabei können unterschiedliche Verfahrensschritte auf unterschiedlichen Computern abgearbeitet werden.

In den Umfang des Erfindungsgedankens fallen weiterhin nicht nur ausführbare Codesequenzen eines Computerprogramms, sondern auch Quellcode, der zur Erzeugung von erfindungsgemässen Programmsequenzen dient. Weiterhin wird auch für computerlesbare Datenträger, welche entweder Programmcode zur Ausführung des erfindungsgemässen Verfahrens oder von Teilen davon enthalten, oder welche Quellcode zur Erzeugung solcher Codesequenzen enthalten, Schutz begehrt.

### Kurze Beschreibung der Zeichnung

Die Erfindung wird nachfolgend anhand eines Ausführungsbeispiels und der Zeichnung näher erläutert. Im Einzelnen zeigen
- Fig. 1 ein stark vereinfachtes Schema eines möglichen erfindungsgemässen Verfahrensablaufs;
- Fig. 2 ein einfaches thermodynamisches Netzwerk;
- Fig. 3 eine Konfigurationsdatei für das Netzwerk aus Figur 2 in Backus-Naur-Notation, welche prinzipiell auch rekursive Definitionen zulässt;
- Fig. 4 eine zweiflutige Niederdruckdampfturbine als Beispiel einer Subschaltung;
- Fig. 5 die Subschaltung aus Fig. 4 in einer anderen Detailstufe;
- Fig. 6 einen Ausschnitt der Subschaltung aus Fig. 4 auf der Darstellungsebene von Funktionselementen;
- Fig. 7 die Darstellung der Dampfturbine aus Fig. 4 als Wärmeschaltbild;
- Fig. 8 die Darstellung der Dampfturbine aus Fig. 4 als Leckageschaltbild.

### Weg zur Ausführung der Erfindung

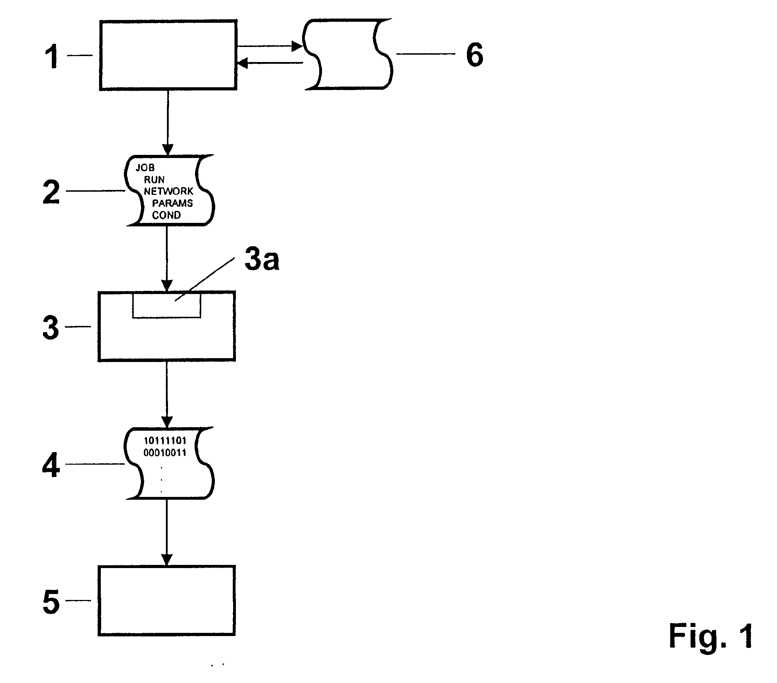

Ein stark vereinfachtes Schema eines möglichen Verfahrensablaufs ist in der Fig. 1 dargestellt. In einem Konfigurationsmodul 1 wird ein Netzwerk konfiguriert. Die Konfiguration wird formatfrei in einer Metasprache, beispielsweise in Backus-Naur-Notation oder in Markup-Language, in einer ASCII-Datei 2 abgelegt, welche als Eingabedatei für ein Löser- oder Rechenmodul 3 dient. Es ist dabei für die Erfindung vollkommen unerheblich, ob diese Datei im Arbeitsspeicher, auf einem nichtflüchtigen Speichermedium, auf einer Schnittstelle eines Computers oder auf andere dem Fachmann geläufige Weise abgelegt wird: Es ist gehört vielmehr zum Wesen der Erfindung, dass alle diese Möglichkeiten nutzbar sind, da gerade die formatfreie Notation diese Eingabedatei eben auch für die Vielfalt heterogener offener Systeme nutzbar macht. Die Eingabedatei wird durch einen einem Fachmann geläufigen Parser 3a des Löser- oder Berechnungsmoduls 3 interpretiert. Das Lösermodul löst die zugehörigen Bilanzgleichungen des in der Eingabedatei 2 definierten und parametrierten thermodynamischen Netzwerkes. Die Lösungsalgorithmen sind dabei auf dem Fachmann geläufige, im unmittelbaren Kontext der Erfindung aber nicht spezifisch relevante, Weise im Lösermodul implementiert. Ergebnisse werden in einer vorzugsweise binären Ergebnisdatei 4 an ein Ausgabemodul 5 übergeben und vorzugsweise grafisch dargestellt. Dabei sind die Vorteile der binären Notation der Ergebnisdaten darin zu sehen, dass Manipulationen der Ergebnisdaten weitgehend unterbunden werden, und andererseits der Speicherbedarf für die im wesentlichen numerischen Ergebnisdaten deutlich geringer ist als bei einer Notation im ASCII-Standard. Ausserdem gehen beim binären Schreiben und Lesen numerischer Daten keine numerischen Informationen verloren. Andererseits, wie bereits erwähnt, könnten diese Daten ebenfalls in einer Meta-Sprachnotation übergeben werden; es wäre in diesem Falle auch ein Parser an der Eingabeschnittstelle des Ausgabemoduls 5 vorzusehen.

Die Konzeption des beschriebenen Verfahrensablaufs legt nahe, im Konfigurationsmodul 1 festgelegte Grafik-, Parametrierungs- und Statusinformationen, sowie gegebenenfalls weitere, für den Verfahrensablauf und -status kennzeichnende Grössen abzulegen. Eine solche Sicherungsdatei 6 wird mit Vorteil formatfrei in einer der oben erläuterten Metasprachen auf einem nichtflüchtigen Speichermedium abgelegt.

Eine Spezialisierung des oben beschriebenen Verfahrensablaufs besteht darin, dass sowohl das Konfigurationsmodul 1 als auch das Ausgabemodul 5 über eine grafische Benutzerschnittstelle verfügen, und zu einem Benutzermodul zusammengefasst sind. Damit lassen sich die Rechenergebnisse in gemeinsam mit den Eingabegrössen und Symbolen in genormten Schaltbildern darstellen.

Es sei an dieser Stelle kurz die Bedeutung des oben verwendeten Begriffes "Module" in diesem Zusammenhang erwähnt. Auf den ersten Blick wird der Fachmann das "Konfigurationsmodul", das "Berechnungsmodul", und das "Ausgabemodul" als Module eines Programmsystems verstehen. Es könnten im Sinne der Erfindung aber auch vollkommen unabhängige, einzelne Programme sein, deren Schnittstellen eben die erwähnten Übergabedateien darstellen, oder es könnte sich auch um Unterprogramme innerhalb eines einzigen Programmes handeln. Insofern sind im Rahmen dieser Beschreibung und im Kontext der Erfindung "Module" und "Programme", so zum Beispiel die Begriffe "Konfigurationsmodul" und "Konfigurationsprogramm", vollkommen äquivalent zu verstehen, und sie umfassen mindestens das dem Fachmann durch die vorangehenden Erläuterungen zugängliche Spektrum.

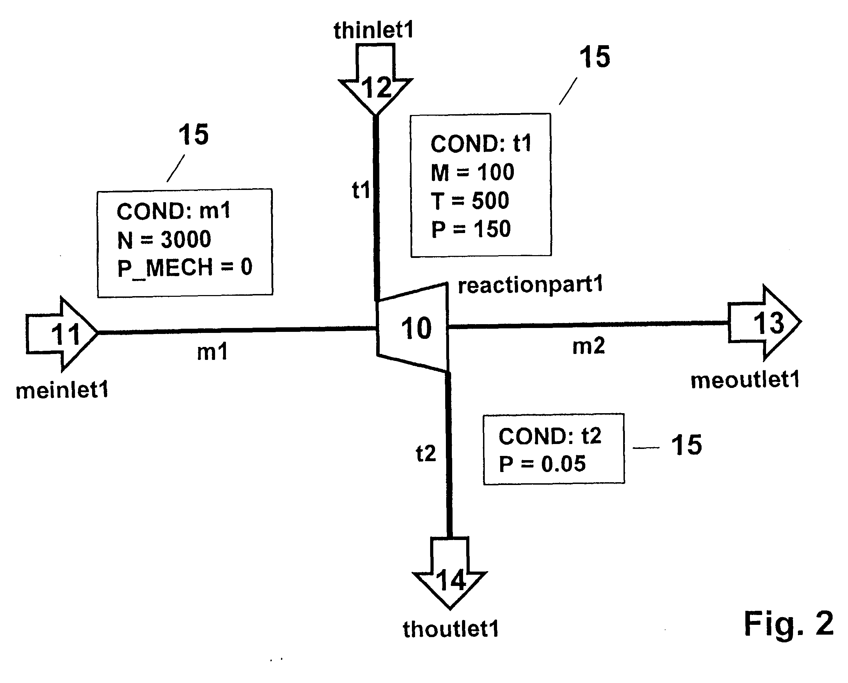

Fig. 2 zeigt ein sehr einfaches thermodynamisches Netzwerk, welches aus einem Funktionselement 10, als "reactionpart1" benannt, besteht. Das Netzwerk verfügt über einen mechanischen Systemeingang 11 "meinlet1" und einen thermischen Systemeingang 12 "thinlet1", sowie einen mechanischen Systemausgang 13 "meoutlet1" und einen thermischen Systemausgang 14 "thoutlet1". Den benannten Verbindungen "m1", "t1" und "t2" sind Parametrierungen 15 zugeordnet, welche Randbedingungen definieren. Die Parametrierungen sind in diesem Beispiel als Konstante angegeben; im Rahmen der Erfindung ist es aber auch möglich, die Parametrierung der Schnittstellen mittels mathematischer Ausdrücke in Abhängigkeit von an anderen Stellen vorliegenden Systemgrössen vorzunehmen.

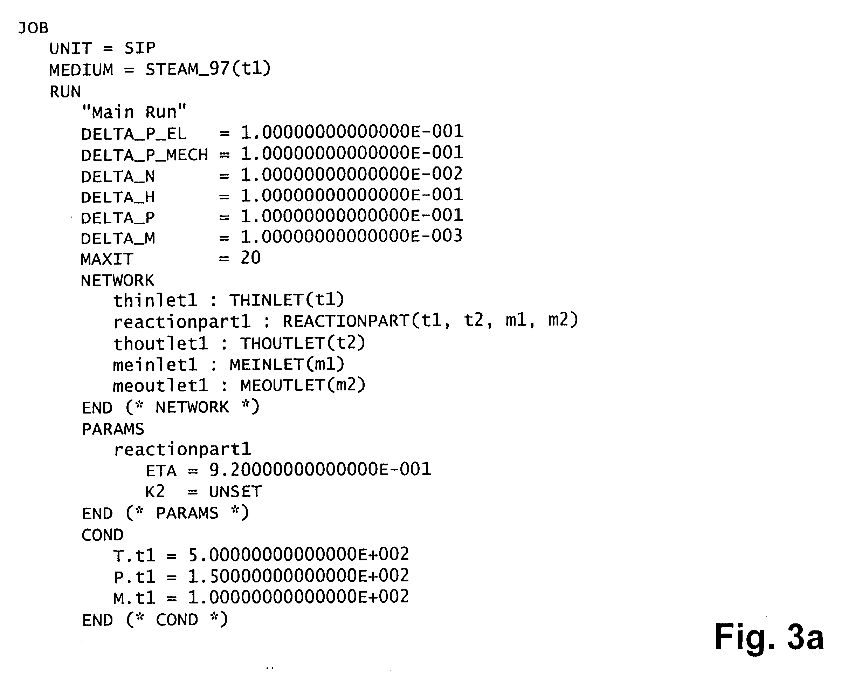

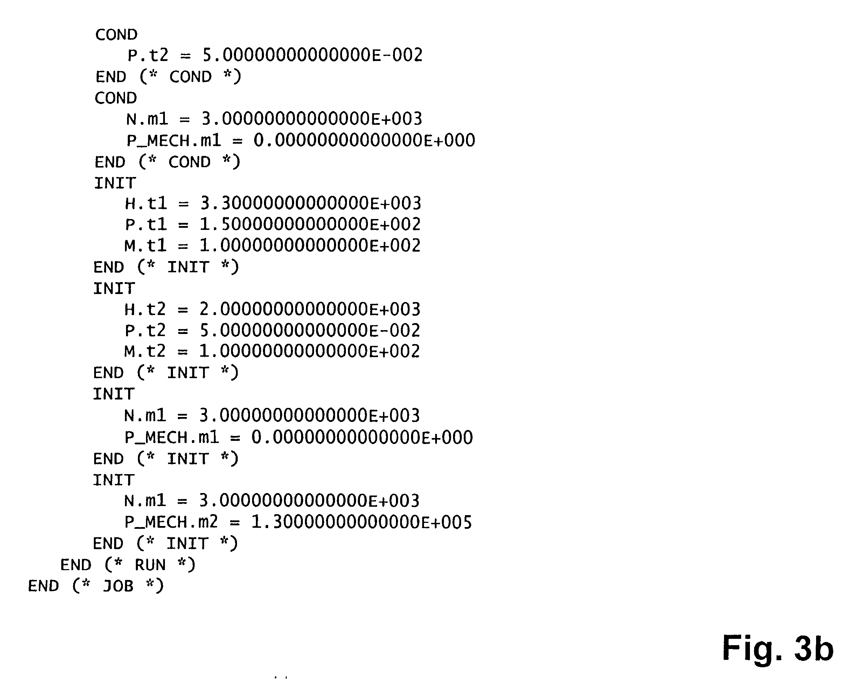

Ein Beispiel für die hier zugehörige Eingabedatei des Lösermoduls in Backus-Naur-Notation findet sich in Fig. 3. Diese Konfigurationsdatei hat in der Tat grosse Ähnlichkeit mit dem sauber strukturierten Quelltext eines Programmes in einer modernen Hochsprache. Für den Fachmann sind ohne weiteres wesentliche Elemente einer Programmstruktur auszumachen. Vollkommen zwanglos ist zu erkennen, dass in einem ersten Abschnitt eines "RUN"-Blockes Randbedingungen für den Programmlauf definiert sind. Ein Block zwischen den Statements "NETWORK" und "END (*NETWORK*)" definiert das thermodynamische Netzwerk. Drei Blöcke, die jeweils zwischen "COND" und "END (*COND*)" eingeschlossen sind, charakterisieren die Randbedingungen an den Ein- und Ausgängen. Weitere als "INIT" gekennzeichnete Blöcke geben Startbedingungen für die Berechnung an. In dieser Weise kann ein dem Fachmann geläufiger Parser innerhalb eines Berechnungsmoduls die Eingabedatei problemlos lesen und interpretieren, sofern die richtigen Schlüsselworte zur Kennzeichnung bestimmter Konfigurationsblöcke vereinbart sind. Ansonsten gewährleistet die dargestellte Notation eine weitgehende Flexibilität, da beispielsweise beliebig viele Zeilen zwischen dem Beginn eines Blockes und dem zugehörigen "END"-Statement stehen können. Zudem kann ein erfahrener Benutzer unmittelbar oder über eine höhere automatische Programmfunktionalität, hierbei wären als Beispiele Optimierermodule oder Validierungsmodule zu nennen, auf die Konfigurationsdatei zugreifen und bestimmte Parametrierungen des Netzwerkes verändern, ohne einen neuen Konfigurationslauf zu starten.

Die Organisation der Daten in durch "END"-Statements abgeschlossenen Blöcken erlaubt die ineinander geschachtelte rekursive Anordnung von Datenblöcken. So könnte im hier dargestellten Ausführungsbeispiel innerhalb des "NETWORK"-Blockes ein weiterer "NETWORK"-Block eingeschachtelt werden, welcher eine Subschaltung beschreibt und eine Rekursion bedeutet.

Eine solche formatfreie Datei kann selbstverständlich problemlos zwischen Computern unterschiedlichster Architekturen transferiert werden, weshalb das erfindungsgemässe Verfahren und das zugehörige Programm die Möglichkeiten offener heterogener Computersysteme vollumfänglich zu nutzen vermag.

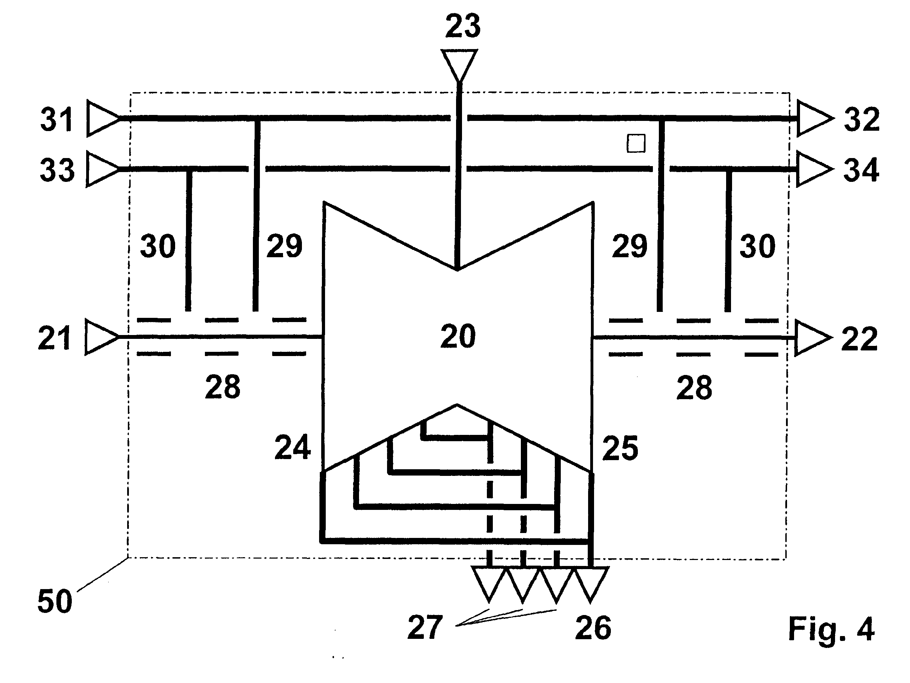

Das Prinzip der Erstellung von Subschaltungen aus Funktionselementen und die Schachtelung von Subschaltungen und Funktionselementen zu neuen Subschaltungen wird nachfolgend anhand der Figuren 4 bis 6 erläutert. Fig. 4 zeigt eine grafische Repräsentation einer zweiflutigen Niederdruckdampfturbine 20, welche Darstellung im Wesentlichen derjenigen in einem Wärmeschaltbild entspricht. Die Dampfturbine 20 ist auf einer Welle angeordnet, welche über einen antriebseitigen Wellenleistungseingang 21 und einen abtriebseitigen Wellenleistungsausgang 22 verfügt. Weiterhin verfügt die Dampfturbine über einen Eingang 23 für Dampf, sowie zwei Abströmschnittstellen 24, 25, welche in einen gemeinsamen Ausgang 26 geführt sind. Die Dampfturbine ist mit geeigneten Vorrichtungen zur Stufenentwässerung versehen, welche in Kondensatdrainagen 27 geführt sind. Die Dampfturbine verfügt weiterhin über Wellendichtungen 28, welche mittels erster Leitungen 29 mit einem Sperrdampfsystem, und mittels zweiter Leitungen 30 mit einem Absaugesystem verbunden sind. Die Dampfturbine 20 bildet in Verbindung mit den zugehörigen Nebensystemen 24, 25, 28, 29, 30 eine Funktionseinheit 50. Zur gesamten hier definierten Funktionseinheit 50 gehören weiterhin Eingänge 31 und 33, sowie Ausgänge 32 und 34 für das Sperrdampf- und das Absaugsystem. Diese Darstellung enthält Ein- und Ausgänge für alle Ströme thermodynamischer Grössen (Massenströme, Enthalpieströme, mechanische Leistungen,....), die eine um die Funktionseinheit 50 gedachte Kontrollraumgrenze überschreiten. Die Funktionseinheit 50 kann ohne detaillierte Kenntnis der inneren Funktion benutzt werden. Dazu müssen nur die Ein- und Ausgänge des Systems mit entsprechenden Ein- und Ausgängen anderer Komponenten verschaltet, oder, wie in der Figur 2 gezeigt, mit Randbedingungen belegt werden. So kann beispielsweise zur Konfiguration des thermodynamischen Netzwerkes der Eingang 23 mit einem Systemeingang und der Ausgang 26 auf der grafischen Benutzeroberfläche mit dem Eingang eines Kondensatorsymbols verbunden werden.

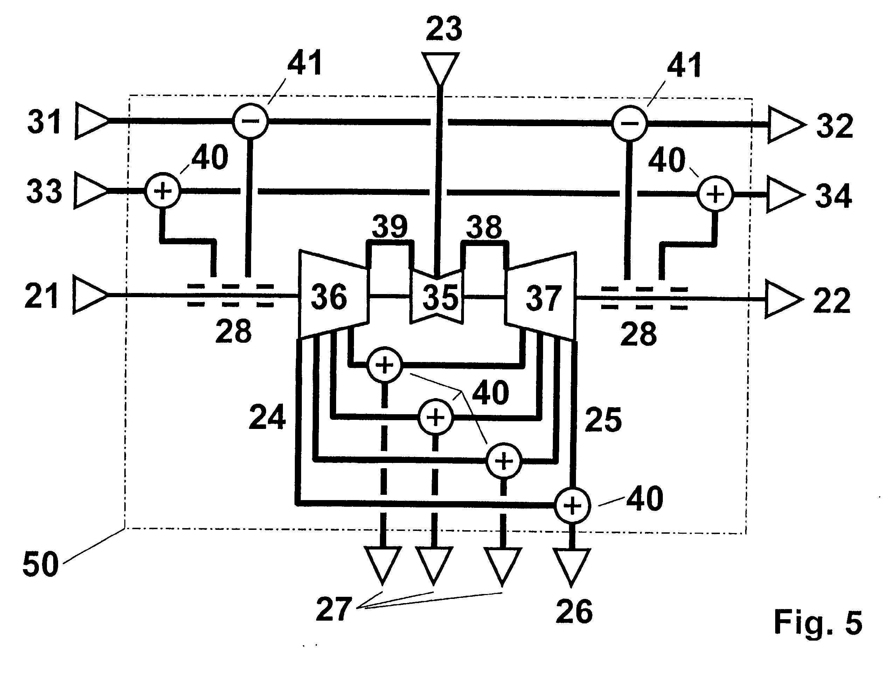

Die Subschaltung 50 als funktionelle Einheit ist bei einer bevorzugten Ausführungsform der Erfindung aus Funktionselementen und/oder anderen Subschaltungen aufgebaut. In einer in Fig. 5 dargestellten detaillierteren Ansicht ist dies gezeigt. Die in Fig. 5 dargestellte Subschaltung ist aus einer Anzahl von Funktionselementen und Baugruppen, welche wiederum Subschaltungen darstellen, zusammengesetzt. Die Funktionseinheit 50 ist als ein thermodynamisches Netzwerk aus einer zweiflutigen Radial-Axialstufe 35 und zwei axialen Beschaufelungen 36, 37, welche durch Verbindungslinien 38, 39 auf der grafischen Benutzeroberfläche miteinander verschaltet sind, sowie den Dichtungsblöcken 28, definiert. Die Beschaufelungen 36, 37 sowie die Dichtungsblöcke 28 stellen ihrerseits Subschaltungen dar. Radial-Axialstufe 35, Mischer 40 und Strömungsteiler 41 hingegen sind Funktionselemente, die nicht mehr weiter aufgeteilt werden können.

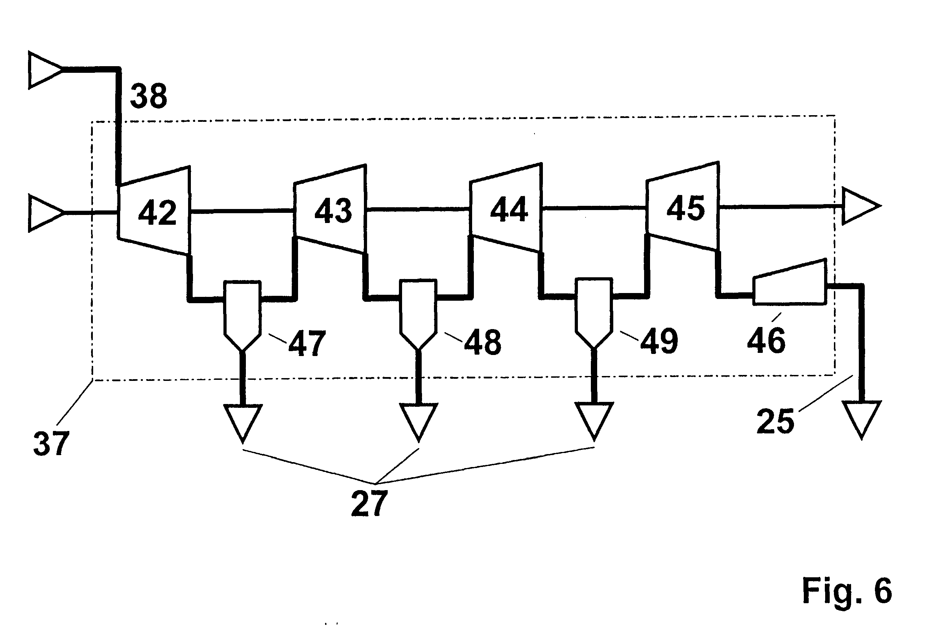

Wie in Fig. 6 dargestellt, ist das Bauelement 37 als eine Subschaltung aus Reaktionsstufen 42, 43, 44, 45, einem Abdampfdiffusor 46, sowie Kondensatabscheidern 47, 48, 49 definiert. Dies sind im vorliegenden Fall alles parametrierte Funktionselemente. Diese repräsentieren eine parametrierbare Übertragungsfunktion zwischen Eingangs- und Ausgangsgrössen.

Entscheidend bei der in diesem Beispiel gezeigten Ausführungsform ist also, dass zunächst durch Parametrierung einfache Baulelemente oder spezifische Funktionselemente aus generischen Funktionselementen erstellt werden, die darauf in einer Bauelementebibliothek abgelegt werden können. Das heisst unter anderem, einfache Funktionselemente, welche eine prinzipiell gleiche Funktion, aber unterschiedliche geometrische Abmessungen haben, werden durch die Parametrierung skaliert, wodurch einfache Bauelemente definiert werden. Durch Zusammenfügen einzelner einfacher Bauelemente, bevorzugt auf einer grafischen Benutzeroberfläche, können einzelne spezifische Funktionselemente als Subschaltungen zu Baugruppen zusammengefügt werden. Dabei können prinzipiell anhand der Rechenvorschriften für das Übertragungsverhalten der einzelnen Bauelemente unmittelbar die Rechenvorschriften für die gesamte Baugruppe ermittelt werden. Die Baugruppen werden mit eigenen Grafiksymbolen gekennzeichnet, und in Bauteilebibliotheken abgelegt. Sodann können diese Baugruppen sofort als funktionelle Einheiten in thermodynamische Netzwerke oder grössere, komplexere Subschaltungen integriert werden. Eine weitere vorteilhafte Option ist es, wenn Baugruppen und Bauteile mit einer Standardparametrierung abgelegt werden, die zur Anpassung an Spezialfälle durch einen Anwender überschrieben werden kann.

Die Verschaltung der Bauelemente untereinander erfolgt vorteilhaft, indem auf einer grafischen Benutzeroberfläche, dem Fachmann auf dem entsprechenden Gebiet auch als GUI geläufig, mittels eines Zeigeinstrumentes Verbindungslinien zwischen den Ausgängen eines Bauelementes oder einer Baugruppe und Eingängen anderer Bauelemente oder Baugruppen gezogen werden. Derartige Methoden sind an sich aus CAD-Programmen bekannt. Im Zusammenhang mit Bilanzierungsprogrammen für thermodynamische Netzwerke sind solche Verfahren nach dem Stand der Technik aber nicht bekannt. Weiterhin werden in der oben beschriebenen Ausführungsform der Erfindung durch solche grafische Methoden funktionelle Verbindungen zwischen grafischen Elementen hergestellt, welche in einer ein-eindeutigen Beziehung mit Rechenregeln stehen. Auf diese Weise wird auch eine Verknüpfung der Rechenregeln hergestellt. Insbesondere dieses Merkmal ist im Zusammenhang mit Programmen zur Bilanzierung thermodynamischer Netzwerke nicht aus dem Stand der Technik bekannt.

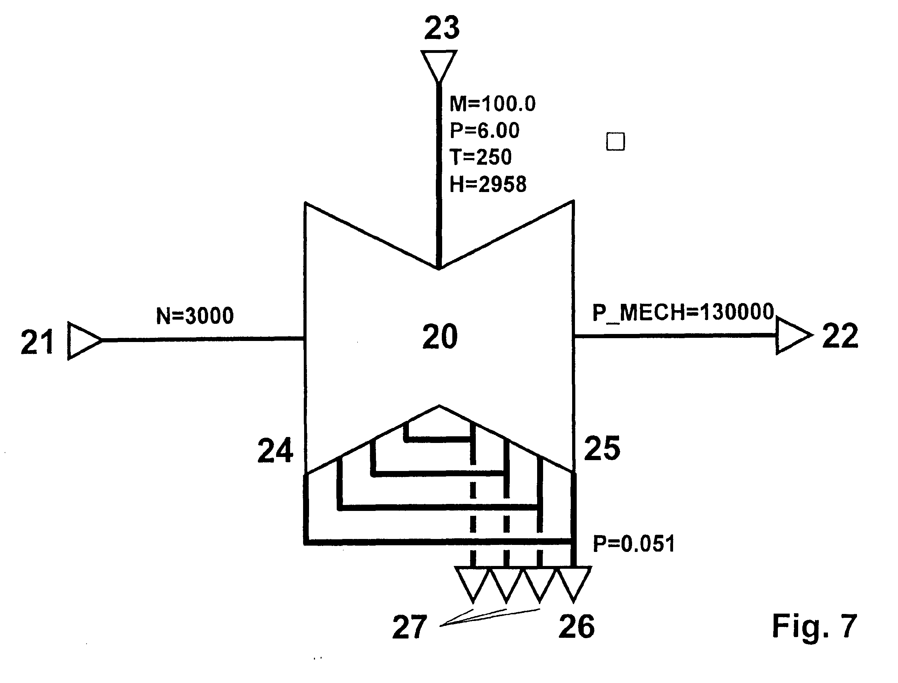

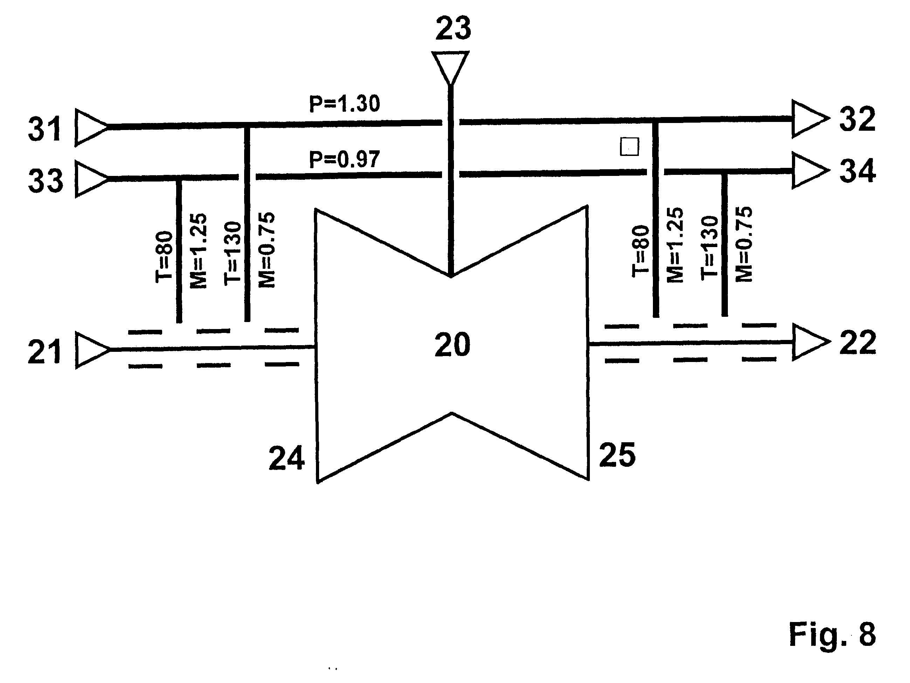

In den Figuren 7 und 8 ist der Einsatz des Layering insbesondere in Verbindung mit der grafischen Darstellung von Subschaltungen zur Darstellung unterschiedlicher Informationstiefen und zur Erstellung von spezifischen Dokumentationen illustriert. Prinzipiell zeigen beide Figuren die Darstellung der Dampfturbine 20 aus Fig. 4, wobei jeweils unterschiedliche Zeichnungsschichten in die Darstellung eingeblendet sind. Fig. 7 zeigt ein Wärmeschaltbild der Dampfturbine. Ein solches Wärmeschaltbild ist zur Bilanzierung verschiedener Lastpunkte in der Angebotsphase und zur Kundendokumentation eines Kraftwerks wichtig. In grosso modo sind die wesentlichen Energieströme dargestellt. Leckage- und Sperrdampfströme sind weggelassen, da sie in diesem Zusammenhang nicht von Interesse sind. Die spezifische Dokumentation wird somit wesentlich übersichtlicher. Im Gegensatz dazu zeigt Fig. 8 ein Leckageschaltbild der Dampfturbine 20, wie es beispielsweise der Konstrukteur braucht, der das Sperr- und Leckagedampfsystem einer Kraftwerksanlage dimensionieren will. Die Darstellungen dürfen aber nicht darüber hinwegtäuschen, dass im entsprechenden Programmsystem die thermodynamischen Daten aller konfigurierten Elemente, auch der nicht dargestellten, in die Bilanzierung mit einbezogen werden: Die Aufteilung in Zeichnungsschichten und die Gruppierung von Zeichnungsschichten, sowie deren selektive Anzeige betreffen nur die grafische Darstellung der thermodynamischen Netzwerke, nicht aber deren Konfiguration und die Berechnung der Zustände.

In Verbindung mit der sogenannten Layering-Technik und der Möglichkeit, als Subschaltungen definierten Funktionsgruppen eigene, normgerechte Grafiksymbole zuzuordnen bietet das erfindungsgemässe Verfahren auch die Möglichkeit, normgerechte Dokumentationen mit genau dem notwendigen und gewünschten Informationsgehalt zu erstellen.

Es versteht sich von selbst, dass die oben genannten Ausführungsbeispiele nur einen Teil der mittels der Erfindung möglichen Ausführungsformen eines Verfahrens zur statischen Simulation nichtlinearer Zusammenhänge in thermodynamischen Netzwerken abdecken. Insbesondere sollte aus dem oben Gesagten hervorgehen, dass insbesondere das Verfahren zur Konfiguration thermodynamischer Netzwerke mittels grafischer Benutzeroberflächen und mit der Möglichkeit, Baugruppen als Subschaltungen zu definieren, auch unabhängig von der formatfreien Datenübergabe realisiert werden kann.

### Bezugszeichenliste

- 1: Konfigurationsmodul, -programm
- 2: Eingabedatei für das Lösermodul
- 3: Lösermodul, -programm
- 3a: Parser
- 4: Ergebnisdatei
- 5: Ausgabemodul, -programm
- 6: Sicherungsdatei
- 10: Funktionselement
- 11: mechanischer Eingang
- 12: thermischer Eingang
- 13: mechanischer Ausgang
- 14: thermischer Ausgang
- 15: Parametrierung (hier: von Randbedingungen)
- 20: zweiflutige Niederdruckdampfturbine
- 21: Wellenleistungseingang
- 22: Wellenleistungsausgang
- 23: Zuströmschnittstelle
- 24: Abströmschnittstelle
- 25: Abströmschnittstelle
- 26: Ausgang für Dampf
- 27: Kondensatdrainage
- 28: Wellendichtung
- 29: Leitung
- 30: Leitung
- 31: Eingang des Sperrdampfsystems
- 32: Ausgang des Sperrdampfsystems
- 33: Eingang des Absaugsystems
- 34: Ausgang des Absaugsystems
- 35: zweiflutige Radial-Axialstufe
- 36: axiale Beschaufelung
- 37: axiale Beschaufelung
- 38: Verbindung
- 39: Verbindung
- 40: Mischer
- 41: Strömungsteiler
- 42: Reaktionsstufe
- 43: Reaktionsstufe
- 44: Reaktionsstufe
- 45: Reaktionsstufe
- 46: Abdampfdiffusor
- 47: Kondensatabscheider
- 48: Kondensatabscheider
- 49: Kondensatabscheider
- 50: Funktionseinheit, Funktionsgruppe

## Patentansprüche

1. Verfahren zur statischen Simulation nichtlinearer Zusammenhänge in thermodynamischen Netzwerken mittels wenigstens eines Computers, bei welchem Verfahren Eingabedaten (2) die von einem Konfigurationsprogramm oder einem Konfigurationsmodul (1) eines Programmsystems erzeugt werden an ein Berechnungsprogramm oder ein Berechnungsmodul (3) eines Programmsystems übergeben werden,
**dadurch gekennzeichnet, dass** die Eingabedaten in Datenblöcken übergeben werden, in welchen die Daten in einer Metasprache; vorliegen und das Konfigurationsprogramm oder das Konfigurationsmodul mit einer graphischen Benutzeroberfläche bedienbar ist, wobei eine Anzahl von vordefinierten Funktionselementen (10) zur Verfügung steht, wobei jedes Funktionselement über eine Anzahl von Eingängen (11, 12) und/oder eine Anzahl von Ausgängen (13, 14) verfügt, zwischen denen eine bestimmte Rechenfunktionalität für die Veränderung thermodynamischer Grössen zwischen den Ein- und Ausgängen definiert ist, wobei zur Konfiguration des thermodynamischen Netzwerkes Ein- und Ausgänge unterschiedlicher Funktionselemente miteinander verbunden werden.

2. Verfahren nach Anspruch 1, **dadurch gekennzeichnet, dass** die Eingabedaten (2) editierbar in ASCII-Dateien abgelegt werden.

3. Verfahren nach einem der Ansprüche 1 oder 2, **dadurch gekennzeichnet, dass** die Eingabedaten für Zwecke des Datentransfers und/oder die Datenarchivierung komprimiert werden.

4. Verfahren nach einem der vorstehenden Ansprüche, **dadurch gekennzeichnet, dass** das Berechnungsprogramm Ergebnisdaten in binärer Notation in Ergebnisdateien (4) abgelegt werden.

5. Verfahren nach einem der vorstehenden Ansprüche, **dadurch gekennzeichnet, dass** das Konfigurationsmodul für den Programmablauf und/oder Status kennzeichnende Daten (6) in einer Meta-Sprache auf einem nichtflüchtigen Speichermedium ablegt.

6. Verfahren nach Anspruch 1, **dadurch gekennzeichnet, dass** zur Definition von spezifischen Funktionselementen generische Funktionselemente parametriert werden.

7. Verfahren nach einem der vorstehenden Ansprüche, **dadurch gekennzeichnet, dass** Randbedingungen auf Schnittstellen des thermodynamischen Netzwerks parametriert werden.

8. Verfahren nach einem der vorstehenden Ansprüche, **dadurch gekennzeichnet, dass** die Parametrierung durch mathematische Ausdrücke dynamisch erfolgt.

9. Verfahren nach einem der Ansprüche 6 bis 8, **dadurch gekennzeichnet, dass** eine Anzahl von Funktionselementen (42, 43, 44, 45, 46, 47, 48, 49; 35, 40, 41) zu benutzerdefinierten Subschaltungen (28, 36, 37, 50) verbunden werden, welche über Ein- und Ausgänge verfügen und ebenso wie Funktionselemente in ein thermodynamisches Netzwerk oder weitere Subschaltungen eingebunden werden.

10. Verfahren nach einem der Ansprüche 6 bis 9 **dadurch gekennzeichnet, dass** spezifische Funktionselemente und Subschaltungen in einer Bauelementebibliothek abgelegt werden.

11. Verfahren nach einem der vorstehenden Ansprüche, **dadurch gekennzeichnet, dass** grafische Elemente und numerische Informationen in unterschiedlichen Zeichnungsschichten abgelegt werden.

12. Verfahren nach Anspruch 11, **dadurch gekennzeichnet, dass** Zeichnungsschichten gruppierbar sind.

13. Verfahren nach einem der vorstehenden Ansprüche, **dadurch gekennzeichnet, dass** Funktionselemente und/oder Funktionsgruppen und/oder Subschaltungen für die Bilanzierung des thermodynamischen Netzwerkes selektiv inaktivierbar sind.

14. Verfahren nach einem der vorstehenden Ansprüche, **dadurch gekennzeichnet, dass** das Konfigurationsprogramm oder Konfigurationsmodul und das Berechnungsprogramm oder Berechnungsmodul auf unterschiedlichen Computern ausgeführt werden.

15. Verfahren nach einem der vorstehenden Ansprüche, **dadurch gekennzeichnet, dass** es zur Berechnung einer Kraftwerksanlage verwendet wird.

16. Verfahren nach einem der vorstehenden Ansprüche, **dadurch gekennzeichnet, dass** es zur Berechnung einer verfahrenstechnischen Anlage verwendet wird.

17. Computerprogramm oder Computerprogrammsystem zur statischen Simulation nichtlinearer Zusammenhänge in thermodynamischen Netzwerken, welches Computerprogramm oder Computerprogrammsystem unter anderem umfasst:
- ein Konfigurationsprogramm oder Konfigurationsmodul, welches bei seiner Ausführung auf einem Computer einen Benutzer zur Konfiguration eines thermodynamischen Netzwerkes befähigt;
- ein Berechnungsprogramm oder Berechnungsmodul, welches bei seiner Ausführung auf einem Computer Bilanzgleichungen eines im Konfigurationsprogramm oder Konfigurationsmodul konfigurierten thermodynamischen Netzwerkes löst;
**dadurch gekennzeichnet, dass** die Übergabe der Konfiguration vom Konfigurationsprogramm oder Konfigurationsmodul an das Berechnungsprogramm oder Berechnungsmodul mittels in einer Metasprache notierten Datenblöcken erfolgt, wobei die zu übergebenden Konfigurationsdaten Eingabedaten für das Berechnungsprogramm oder das Berechnungsmodul darstellen und das Konfigurationsprogramm oder Konfigurationsmodul eine grafische Benutzeroberfläche beinhaltet, bei der ein Anwender sowohl Funktionselemente als auch vordefinierte Funktionsgruppen über Ein- und Ausgänge der Funktionselemente und/oder der Funktionsgruppen miteinander zu einem thermodynamischen Netzwerk verbinden kann.

18. Computerprogramm oder Computerprogrammsystem nach Anspruch 17, **dadurch gekennzeichnet, dass** das Computerprogramm oder Computerprogrammsystem einen Symboleditor beinhaltet.

19. Computerprogramm oder Computerprogrammsystem nach einem der Ansprüche 17 oder 18, **dadurch gekennzeichnet, dass** die Konfigurationdaten in ASCII-Dateien abgelegt werden.

20. Computerprogramm oder Computerprogrammsystem nach einem der Ansprüche 17 bis 19, **dadurch gekennzeichnet, dass** das Berechnungsprogramm bei seiner Ausführung auf einem Computer Ergebnisdaten in Dateien binärer Notation ablegt.

21. Computerprogramm oder Computerprogrammsystem nach einem der Ansprüchen 17 bis 20, **dadurch gekennzeichnet dass** die grafische Benutzeroberfläche einem Anwender die Möglichkeit gibt, grafische Elemente und/oder numerische Informationen beliebig in unterschiedlichen Zeichnungsschichten anzuordnen.

22. Computerprogramm oder Computerprogrammsystem nach Anspruch 21, **dadurch gekennzeichnet, dass** Zeichnungsschichten gruppierbar sind.

23. Computerprogramm oder Computerprogrammsystem nach einem der Ansprüche 17 bis 22, **dadurch gekennzeichnet, dass** das Berechnungsprogramm oder Berechnungsmodul wenigstens einen Parser umfasst, welcher zum Lesen und zur Interpretation der Konfigurationsdaten dient.

24. Computerprogramm oder Computerprogrammsystem nach einem der Ansprüche 17 bis 23, **dadurch gekennzeichnet, dass** das Konfigurationsprogramm oder Konfigurationsmodul wenigstens einen Datenkomprimierer umfasst, welcher die Konfigurationsdaten komprimiert, und, dass das Berechnungsprogramm oder Berechnungsmodul einen Datendekomprimierer umfasst, welcher die Daten dekomprimiert.

25. Computerprogrammprodukt, nämlich computerlesbares Medium, auf welchem der Computerprogrammcode eines Computerprogrammes oder Computerprogrammsystems nach einem der Ansprüche 17 bis 24 gespeichert sind.

## Claims

1. Method for the static simulation of non-linear relations in thermodynamic networks by means of at least one computer, in which method input data (2), which is generated by a configuration program or a configuration module (1) of a program system, is passed to a calculation program or a calculation module (3) of a program system, **characterized in that** the input data is passed in data blocks in which the data is present in a metalanguage, and the configuration program or the configuration module can be operated using a graphical user interface, wherein a number of predefined function elements (10) are available, wherein each function element has a number of inputs (11, 12) and/or a number of outputs (13, 14) between which a specific calculation functionality for the variation of thermodynamic variables between the inputs and outputs is defined, wherein inputs and outputs of different function elements are connected to one another in order to configure the thermodynamic network.

2. Method according to Claim 1, **characterized in that** the input data (2) is stored in editable form in ASCII files.

3. Method according to one of Claims 1 or 2, **characterized in that** the input data is compressed for purposes of data transfer and/or data archiving.

4. Method according to one of the preceding claims, **characterized in that** the calculation program stores result data in result files (4) in binary notation.

5. Method according to one of the preceding claims, **characterized in that** the configuration module stores data (6) characterizing the program execution and/or status on a non-volatile storage medium in a metalanguage.

6. Method according to Claim 1, **characterized in that** generic function elements are parameterized for defining specific function elements.

7. Method according to one of the preceding claims, **characterized in that** boundary conditions are parameterized on interfaces of the thermodynamic network.

8. Method according to one of the preceding claims, **characterized in that** the parameterization is performed dynamically using mathematical expressions.

9. Method according to one of Claims 6 to 8, **characterized in that** a number of function elements (42, 43, 44, 45, 46, 47, 48, 49; 35, 40, 41) are connected to form user-defined subcircuits (28, 36, 37, 50) which have inputs and outputs and are incorporated just like function elements in a thermodynamic network or further subcircuits.

10. Method according to one of Claims 6 to 9, **characterized in that** specific function elements and subcircuits are stored in a component library.

11. Method according to one of the preceding claims, **characterized in that** graphical elements and numeric information are stored in different drawing layers.

12. Method according to Claim 11, **characterized in that** drawing layers can be grouped.

13. Method according to one of the preceding claims, **characterized in that** function elements and/or function groups and/or subcircuits can be selectively deactivated for balancing the thermodynamic network.

14. Method according to one of the preceding claims, **characterized in that** the configuration program or configuration module and the calculation program or calculation module are executed on different computers.

15. Method according to one of the preceding claims, **characterized in that** it is used for calculating a power plant.

16. Method according to one of the preceding claims, **characterized in that** it is used for calculating a process engineering system.

17. Computer program or computer program system for the static simulation of non-linear relations in thermodynamic networks, which computer program or computer program system includes, inter alia:
- a configuration program or configuration module which, when it is executed on a computer, enables a user to configure a thermodynamic network;
- a calculation program or calculation module which, when it is executed on a computer, solves balance equations of a thermodynamic network configured in the configuration program or configuration module;
**characterized in that** the configuration is passed by the configuration program or configuration module to the calculation program or calculation module by means of data blocks notated in a metalanguage, wherein the configuration data to be passed represents input data for the calculation program or the calculation module, and the configuration program or configuration module contains a graphical user interface with which a user can connect to one another both function elements and predefined function groups via inputs and outputs of the function elements and/or of the function groups in order to form a thermodynamic network.

18. Computer program or computer program system according to Claim 17, **characterized in that** the computer program or computer program system contains a symbol editor.

19. Computer program or computer program system according to one of Claims 17 or 18, **characterized in that** the configuration data is stored in ASCII files.

20. Computer program or computer program system according to one of Claims 17 to 19, **characterized in that**, when it is executed on a computer, the calculation program stores result data in files with binary notation.

21. Computer program or computer program system according to one of Claims 17 to 20, **characterized in that** the graphical user interface enables a user to arrange graphical elements and/or numeric information in different drawing layers as desired.

22. Computer program or computer program system according to Claim 21, **characterized in that** drawing layers can be grouped.

23. Computer program or computer program system according to one of Claims 17 to 22, **characterized in that** the calculation program or calculation module includes at least one parser which serves to read and to interpret the configuration data.

24. Computer program or computer program system according to one of Claims 17 to 23, **characterized in that** the configuration program or configuration module includes at least one data compressor which compresses the configuration data, and **in that** the calculation program or calculation module includes a data decompressor which decompresses the data.

25. Computer program product, namely computer-readable medium, on which the computer program code of a computer program or of a computer program system according to one of Claims 17 to 24 is stored.

## Revendications

1. Procédé de simulation statique de relations non linéaires dans des réseaux thermodynamiques au moyen d'au moins un ordinateur, des données d'entrée (2) étant générées par un programme de configuration ou un module de configuration (1) d'un système de programme et transmises à un programme de calcul ou un module de calcul (3) d'un système de programme, **caractérisé en ce que** les données d'entrée sont transférées dans des blocs de données dans lesquels les données sont présentes dans un métalangage et le programme de configuration ou le module de configuration peut être commandé avec une interface d'utilisateur graphique, un nombre donné d'éléments fonctionnels (10) prédéfinis étant disponible, chaque élément fonctionnel disposant d'un nombre donné d'entrées (11, 12) et/ou d'un nombre donné de sorties (13, 14) entre lesquelles est définie une fonctionnalité de calcul donnée pour la modification des grandeurs thermodynamiques entre les entrées et les sorties, les entrées et les sorties des différents éléments fonctionnels étant reliées ensemble pour la configuration du réseau thermodynamique.

2. Procédé selon la revendication 1, **caractérisé en ce que** les données d'entrée (2) sont enregistrées sous une forme éditable dans des fichiers ASCII.

3. Procédé selon l'une des revendications 1 ou 2, **caractérisé en ce que** les données d'entrée sont comprimées à des fins de transfert des données et/ou d'archivage des données.

4. Procédé selon l'une des revendications précédentes, **caractérisé en ce que** le programme de calcul enregistre les données de résultat en notation binaire dans des fichiers de résultat (4).

5. Procédé selon l'une des revendications précédentes, **caractérisé en ce que** le module de configuration enregistre dans un métalangage sur un support de mémorisation non volatile des données (6) identifiant le déroulement du programme et/ou l'état.

6. Procédé selon la revendication 1, **caractérisé en ce que** des éléments fonctionnels génériques sont paramétrés pour définir des éléments fonctionnels spécifiques.

7. Procédé selon l'une des revendications précédentes, **caractérisé en ce que** les conditions additionnelles sont paramétrées sur des interfaces du réseau thermodynamique.

8. Procédé selon l'une des revendications précédentes, **caractérisé en ce que** le paramétrage s'effectue de manière dynamique par des expressions mathématiques.

9. Procédé selon l'une des revendications 6 à 8, **caractérisé en ce qu'**un certain nombre d'éléments fonctionnels (42, 43, 44, 45, 46, 47, 48, 49 ; 35, 40, 41) sont reliés ensemble en sous-circuits définis par l'utilisateur (28, 36, 37, 50), lesquels disposent d'entrées et de sorties et sont eux aussi, tout comme les éléments fonctionnels, intégrés dans un réseau thermodynamique ou dans d'autres sous-circuits.

10. Procédé selon l'une des revendications 6 à 9, **caractérisé en ce que** des éléments fonctionnels et sous-circuits spécifiques sont enregistrés dans une bibliothèque de composants.

11. Procédé selon l'une des revendications précédentes, **caractérisé en ce que** des éléments graphiques et des informations numériques sont enregistrés dans différentes couches de dessin.

12. Procédé selon la revendication 11, **caractérisé en ce que** les couches de dessin peuvent être groupées.

13. Procédé selon l'une des revendications précédentes, **caractérisé en ce que** les éléments fonctionnels et/ou les groupes de fonctions et/ou les sous-circuits peuvent être désactivés de manière sélective pour établir le bilan du réseau thermodynamique.

14. Procédé selon l'une des revendications précédentes, **caractérisé en ce que** le programme de configuration ou le module de configuration et le programme de calcul ou le module de calcul sont exécutés sur des ordinateurs différents.

15. Procédé selon l'une des revendications précédentes, **caractérisé en ce qu'**il est utilisé pour le calcul d'un équipement de centrale électrique.

16. Procédé selon l'une des revendications précédentes, **caractérisé en ce qu'**il est utilisé pour le calcul d'un équipement technique de procédé.

17. Programme informatique ou système de programme informatique de simulation statique de relations non linéaires dans des réseaux thermodynamiques, ledit programme informatique ou système de programme informatique comprenant entre autres :
- un programme de configuration ou un module de configuration qui, lors de son exécution sur un ordinateur, permet à un utilisateur de configurer un réseau thermodynamique ;
- un programme de calcul ou un module de calcul qui, lors de son exécution sur un ordinateur, résout des équations de bilan d'un réseau thermodynamique configuré dans le programme de configuration ou le module de configuration ;
**caractérisé en ce que** le transfert de la configuration du programme de configuration ou du module de configuration au programme de calcul ou au module de calcul s'effectue au moyen de blocs de données notés dans un métalangage, les données de configuration à transférer représentant des données d'entrée pour le programme de calcul ou le module de calcul et le programme de configuration ou le module de configuration comprenant une interface d'utilisateur graphique avec laquelle un utilisateur peut relier ensemble aussi bien des éléments fonctionnels que des groupes de fonctions prédéfinis à un réseau thermodynamique par le biais des entrées et sorties des éléments fonctionnels et/ou des groupes de fonctions.

18. Programme informatique ou système de programme informatique selon la revendication 17, **caractérisé en ce que** le programme informatique ou le système de programme informatique contient un éditeur de symboles.

19. Programme informatique ou système de programme informatique selon l'une des revendications 17 ou 18, **caractérisé en ce que** les données de configuration sont enregistrées sous la forme de données ASCII.

20. Programme informatique ou système de programme informatique selon l'une des revendications 17 à 19, **caractérisé en ce que** le programme de calcul, lors de son exécution sur un ordinateur, enregistre les données de résultat dans des fichiers à notation binaire.

21. Programme informatique ou système de programme informatique selon l'une des revendications 17 à 20, **caractérisé en ce que** l'interface d'utilisateur graphique donne à un utilisateur la possibilité de disposer des éléments graphiques et/ou des informations numériques à volonté dans différentes couches de dessin.

22. Programme informatique ou système de programme informatique selon la revendication 21, **caractérisé en ce que** les couches de dessin peuvent être groupées.

23. Programme informatique ou système de programme informatique selon l'une des revendications 17 à 22, **caractérisé en ce que** le programme de calcul ou le module de calcul comprend au moins un programme d'analyse syntaxique qui sert à la lecture et à l'interprétation des données de configuration.

24. Programme informatique ou système de programme informatique selon l'une des revendications 17 à 23, **caractérisé en ce que** le programme de configuration ou le module de configuration comprend au moins un compresseur de données qui compresse les données de configuration et que le programme de calcul ou le module de calcul comprend un décompresseur de données qui décompresse les données.

25. Produit de programme informatique, à savoir support lisible sur un ordinateur sur lequel est enregistré le code de programme informatique d'un programme informatique ou d'un système de programme informatique selon l'une des revendications 17 à 24.
